(19) Europäisches Patentamt / European Patent Office / Office européen des brevets

(11) **EP 4 315 679 B1**

(12) **EUROPEAN PATENT SPECIFICATION**

(45) Date of publication and mention
of the grant of the patent:
**10.12.2025 Bulletin 2025/50**

(21) Application number: **21933543.7**

(22) Date of filing: **29.03.2021**

(51) International Patent Classification (IPC):
*H04L 1/16* (2023.01)    *H04L 1/1867* (2023.01)

(52) Cooperative Patent Classification (CPC):
**H04L 1/1861; H04L 1/1614; H04L 1/1822;
H04L 1/1854; H04L 1/1896;** H04L 5/0055

(86) International application number:
**PCT/CN2021/083518**

(87) International publication number:
**WO 2022/204856 (06.10.2022 Gazette 2022/40)**

(54) **METHOD AND APPARATUS FOR NACK-ONLY BASED HARQ-ACK FEEDBACK MULTIPLEXING**

VERFAHREN UND VORRICHTUNG FÜR NACK-ONLY-BASIERTES
HARQ-ACK-RÜCKKOPPLUNGSMULTIPLEXING

PROCÉDÉ ET APPAREIL DE MULTIPLEXAGE PAR RÉTROACTION HARQ-ACK BASÉ
UNIQUEMENT SUR NACK

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.02.2024 Bulletin 2024/06**

(73) Proprietor: **Lenovo (Beijing) Limited
Beijing 100085 (CN)**

(72) Inventor: **LEI, Haipeng
Beijing 100082 (CN)**

(74) Representative: **Openshaw & Co.
8 Castle Street
Farnham, Surrey GU9 7HR (GB)**

(56) References cited:
CN-A- 110 199 491    US-A1- 2017 353 273
US-A1- 2019 123 923    US-A1- 2019 342 036

• **LENOVO ET AL: "Discussion on reliability
improvement for RRC-CONNECTED UEs", vol.
RAN WG1, no. E-meeting; 20210125 - 20210205,
18 January 2021 (2021-01-18), XP051970515,
Retrieved from the Internet <URL:https://
ftp.3gpp.org/tsg_ran/WG1_RL1/TSGR1_104-e/
Docs/R1-2100769.zip R1-2100769.docx>
[retrieved on 20210118]**
• **LG ELECTRONICS INC: "Mechanisms to improve
Reliability of Broadcast/Multicast service", vol.
RAN WG1, no. Online; 20201026 - 20201113, 1
November 2020 (2020-11-01), XP052349423,
Retrieved from the Internet <URL:https://
ftp.3gpp.org/tsg_ran/WG1_RL1/TSGR1_103-e/
Docs/R1-2008065.zip R1-2008065 Mechanisms to
improve reliability of MBS.docx> [retrieved on
20201101]**
• **FUTUREWEI: "Group scheduling for MC/BC
services", vol. RAN WG1, no. e-Meeting;
20201026 - 20201113, 1 November 2020
(2020-11-01), XP052348910, Retrieved from the
Internet <URL:https://ftp.3gpp.org/tsg_ran/
WG1_RL1/TSGR1_103-e/Docs/R1-2007556.zip
R1-2007556.docx> [retrieved on 20201101]**

- **VIVO: "Discussion on mechanisms to improve reliability for RRC_CONNECTED UEs", vol. RAN WG1, no. e-Meeting; 20210125 - 20210205, 18 January 2021 (2021-01-18), XP051970391, Retrieved from the Internet <URL:https:// ftp.3gpp.org/tsg_ran/WG1_RL1/TSGR1_104-e/ Docs/R1-2100470.zip R1-2100470-Discussion on mechanisms to improve reliability for RRC_CONNECTED UEs.docx> [retrieved on 20210118]**
- **HUAWEI, HISILICON: "Multiplexing of multiple HARQ-ACK feedback", 3GPP DRAFT; R1-1708151, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Hangzhou, China; 20170515 - 20170519, 14 May 2017 (2017-05-14), Mobile Competence Centre ; 650, route des Lucioles ; F-06921 Sophia-Antipolis Cedex ; France , XP051273347**

## Description

### TECHNICAL FIELD

Embodiments of the present disclosure generally relate to wireless communication technology, and more particularly to hybrid automatic repeat request acknowledgement (HARQ-ACK) feedback transmission.

### BACKGROUND

Wireless communication systems are widely deployed to provide various telecommunication services, such as telephony, video, data, messaging, broadcasts, and so on. Wireless communication systems may employ multiple access technologies capable of supporting communication with multiple users by sharing available system resources (e.g., time, frequency, and power). Examples of wireless communication systems may include fourth generation (4G) systems, such as long term evolution (LTE) systems, LTE-advanced (LTE-A) systems, or LTE-A Pro systems, and fifth generation (5G) systems which may also be referred to as new radio (NR) systems.

A wireless communication system may support multicast and broadcast services (MBSs). One or more user equipment (UE) may be grouped as an MBS group and may receive multicast transmissions from a base station (BS) via a physical downlink shared channel (PDSCH). The one or more UEs may transmit hybrid automatic repeat request acknowledgement (HARQ-ACK) feedback corresponding to the PDSCH transmission through a physical uplink control channel (PUCCH) or a physical uplink shared channel (PUSCH).

There is a need for handling HARQ-ACK feedback for multicast transmissions in a wireless communication system.

Lenovo et al, "Discussion on reliability improvement for RRC-CONNECTED UEs", R1-2100769, 3GPP TSG RAN WG1 #104-e, E-meeting, January 25th - February 5th, 2021, presents detailed views regarding HARQ-ACK feedback and CSI feedback as well as scheduling mechanism for reliability improvement issues for RRC-CONNECTED UEs in Rel-17 NR MBS.

LG Electronics, "Mechanisms to improve Reliability of Broadcast/Multicast service", R1-2008065, 3GPP TSG RAN WG1 Meeting #103-e, Online, 26 October - 13 November 2020, discusses mechanisms to improve reliability of Broadcast/Multicast service.

Futurewei, "Group scheduling for MC/BC services", R1-2007556, 3GPP TSG RAN WG1 #103-e, e-Meeting, October 26th - November 13th, 2020, presents views on the group scheduling mechanism for MBS.

Vivo, "Discussion on mechanisms to improve reliability for RRC_CONNECTED UEs", R1-2100470, 3GPP TSG RAN WG1 #104-e, e-Meeting, January 25th - February 5th, 2021, discusses mechanisms to improve reliability for RRC_CONNECTED UEs.

### SUMMARY

The invention is defined by the appended independent claims.

### BRIEF DESCRIPTION OF THE DRAWINGS

In order to describe the manner in which the advantages and features of the disclosure can be obtained, a description of the disclosure is rendered by reference to specific embodiments thereof, which are illustrated in the appended drawings. These drawings depict only exemplary embodiments of the disclosure and are not therefore to be considered limiting of its scope.

FIG. 1 illustrates a schematic diagram of a wireless communication system in accordance with some embodiments of the present disclosure;

FIG. 2 illustrates a conceptual diagram of transmitting multiple NACK-only based HARQ-ACK feedback in the same slot in accordance with some embodiments of the present disclosure;

FIG. 3 illustrates a conceptual diagram of transmitting multiple NACK-only based HARQ-ACK feedback in the same slot in accordance with some embodiments of the present disclosure;

FIG. 4 illustrates a flow chart of an exemplary procedure of wireless communications in accordance with some embodiments of the present disclosure;

FIG. 5 illustrates a flow chart of an exemplary procedure of wireless communications in accordance with some embodiments of the present disclosure; and

FIG. 6 illustrates a block diagram of an exemplary apparatus in accordance with some embodiments of the present disclosure.

## DETAILED DESCRIPTION

The detailed description of the appended drawings is intended as a description of the preferred embodiments of the present disclosure and is not intended to represent the only form in which the present disclosure may be practiced. It should be understood that the same or equivalent functions may be accomplished by different embodiments that are intended to be encompassed within the spirit and scope of the present disclosure.

Reference will now be made in detail to some embodiments of the present disclosure, examples of which are illustrated in the accompanying drawings. To facilitate understanding, embodiments are provided under specific network architecture and new service scenarios, such as the 3rd generation partnership project (3GPP) 5G (NR), 3GPP long-term evolution (LTE) Release 8, and so on. It is contemplated that along with the developments of network architectures and new service scenarios, all embodiments in the present disclosure are also applicable to similar technical problems; and moreover, the terminologies recited in the present disclosure may change, which should not affect the principles of the present disclosure.

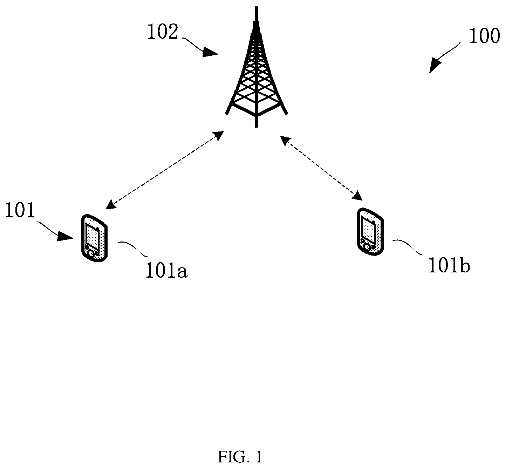

FIG. 1 illustrates a schematic diagram of a wireless communication system 100 in accordance with some embodiments of the present disclosure.

As shown in FIG. 1, a wireless communication system 100 may include some UEs 101 (e.g., UE 101a and UE 101b) and a base station (e.g., BS 102). Although a specific number of UEs 101 and BS 102 are depicted in FIG. 1, it is contemplated that any number of UEs and BSs may be included in the wireless communication system 100.

The UE(s) 101 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to some embodiments of the present disclosure, the UE(s) 101 may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments of the present disclosure, the UE(s) 101 includes wearable devices, such as smart watches, fitness bands, optical head-mounted displays, or the like. Moreover, the UE(s) 101 may be referred to as a subscriber unit, a mobile, a mobile station, a user, a terminal, a mobile terminal, a wireless terminal, a fixed terminal, a subscriber station, a user terminal, or a device, or described using other terminology used in the art. The UE(s) 101 may communicate with the BS 102 via uplink (UL) communication signals.

The BS 102 may be distributed over a geographic region. In certain embodiments of the present disclosure, the BS 102 may also be referred to as an access point, an access terminal, a base, a base unit, a macro cell, a Node-B, an evolved Node B (eNB), a gNB, a Home Node-B, a relay node, or a device, or described using other terminology used in the art. The BS 102 is generally a part of a radio access network that may include one or more controllers communicably coupled to one or more corresponding BSs 102. The BS 102 may communicate with UE(s) 101 via downlink (DL) communication signals.

The wireless communication system 100 may be compatible with any type of network that is capable of sending and receiving wireless communication signals. For example, the wireless communication system 100 is compatible with a wireless communication network, a cellular telephone network, a time division multiple access (TDMA)-based network, a code division multiple access (CDMA)-based network, an orthogonal frequency division multiple access (OFDMA)-based network, an LTE network, a 3GPP-based network, a 3GPP 5G network, a satellite communications network, a high altitude platform network, and/or other communications networks.

In some embodiments of the present disclosure, the wireless communication system 100 is compatible with 5G NR of the 3GPP protocol. For example, BS 102 may transmit data using an orthogonal frequency division multiple (OFDM) modulation scheme on the DL and the UE(s) 101 may transmit data on the UL using a discrete Fourier transform-spread-orthogonal frequency division multiplexing (DFT-S-OFDM) or cyclic prefix-OFDM (CP-OFDM) scheme. More generally, however, the wireless communication system 100 may implement some other open or proprietary communication protocols, for example, WiMAX, among other protocols.

In some embodiments of the present disclosure, the BS 102 and UE(s) 101 may communicate using other communication protocols, such as the IEEE 802.11 family of wireless communication protocols. Further, in some embodiments of the present disclosure, the BS 102 and UE(s) 101 may communicate over licensed spectrums, whereas in some other embodiments, the BS 102 and UE(s) 101 may communicate over unlicensed spectrums. The present disclosure is not intended to be limited to the implementation of any particular wireless communication system architecture or protocol.

In some embodiments of the present disclosure, the wireless communication system 100 may support multicast and broadcast services (MBSs). For example, one or more UEs (e.g., UE 101a and UE 101b) may be grouped as an MBS group to receive MBSs (e.g., an MBS PDSCH) from a BS (e.g., BS 102). Several transmission schemes including, but not limited to, the following three transmission schemes may be applied for multicast transmission: a point-to-point (PTP) transmission scheme, point-to-multipoint (PTM) transmission scheme 1, and PTM transmission scheme 2.

Under the PTP transmission scheme, RRC_CONNECTED UEs may use a UE-specific PDCCH with a cyclic redundancy check (CRC) scrambled by a UE-specific radio network temporary identifier (RNTI) (e.g., cell-RNTI (C-RNTI)) to schedule a UE-specific PDSCH which is scrambled by the same UE-specific RNTI.

Under PTM transmission scheme 1, RRC_CONNECTED UEs in the same MBS group may use a group-common PDCCH with a cyclic redundancy check (CRC) scrambled by a group-common radio network temporary identifier (RNTI) to schedule a group-common PDSCH which is scrambled by the same group-common RNTI. This scheme may also be referred to as a group-common PDCCH based group scheduling scheme. The group-common RNTI may be configured via RRC signaling.

Under PTM transmission scheme 2, RRC_CONNECTED UEs in the same MBS group may use a UE-specific PDCCH with a CRC scrambled by a UE-specific RNTI (e.g., cell-RNTI) to schedule a group-common PDSCH which is scrambled by a group-common RNTI. This scheme may also be referred to as a UE-specific PDCCH based group scheduling scheme.

The "group-common PDCCH/PDSCH" may mean that the PDCCH or PDSCH is transmitted at a common time and/or on frequency resources, and can be identified by all the UEs in the same MBS group. The "UE-specific PDCCH / PDSCH" may mean that the PDCCH or PDSCH can only be identified by the target UE, but cannot be identified by other UEs.

A UE receiving a downlink multicast transmission may transmit HARQ-ACK feedback corresponding to the downlink multicast transmission to the BS through, for example, a physical uplink control channel (PUCCH). The HARQ-ACK feedback corresponding to downlink multicast transmission is essential for the multicast services in order to satisfy a quality of service (QoS) requirement, such as reliability. In some embodiments of the present disclosure, a group-common RNTI (e.g., group-RNTI (G-RNTI)) is introduced for an MBS so that a UE can differentiate a downlink control information (DCI) format scheduling an MBS PDSCH from a DCI format scheduling a unicast PDSCH. For example, the CRC of the DCI scheduling an MBS PDSCH may be scrambled by the G-RNTI and the scheduled group-common PDSCH carrying the MBS may also be scrambled by the G-RNTI.

In some embodiments of the present disclosure, for RRC_CONNECTED UEs receiving multicast, at least for PTM transmission scheme 1, at least one of ACK/NACK based HARQ-ACK feedback for multicast and NACK-only based HARQ-ACK feedback for multicast is supported.

When ACK/NACK based HARQ-ACK feedback for multicast is applied, a UE may feed back either an acknowledgement (ACK) or a negative ACK (NACK) in response to the PDSCH carrying the multicast service, depending on, for example, the decoding status of the PDSCH. In some embodiments of the present disclosure, PUCCH recourse configuration for the ACK and NACK feedback may be shared or separate PUCCH resources among the UEs within the same MBS group.

When NACK-only based HARQ-ACK feedback for multicast is applied, a UE may only feed back a NACK. For example, when the PDSCH carrying multicast service is correctly decoded, the UE may not transmit any feedback; and when the PDSCH carrying multicast service is incorrectly decoded, the UE may feed back a NACK for the PDSCH.

In some embodiments of the present disclosure, when ACK/NACK based HARQ-ACK feedback is supported, both a Type-1 HARQ-ACK codebook and Type-2 HARQ-ACK codebook (but not limited to) may be supported for RRC_CONNECTED UEs receiving multicast.

In some embodiments of the present disclosure, when ACK/NACK based HARQ-ACK feedback for multicast is applied, it may be up to the network to configure orthogonal PUCCH resources among UEs within the same group. In some embodiments of the present disclosure, when NACK-only based HARQ-ACK feedback for multicast is applied, it may be up to the network to configure the PUCCH resources, which can be shared or different among UEs within the same group.

In view of the above, NACK-only based HARQ-ACK feedback on a shared PUCCH resource for a group of UEs would minimize the overhead of the PUCCH resources since only one PUCCH resource for the NACK transmission is required for the group of UEs.

Furthermore, in the case that NACK-only based HARQ-ACK feedback is configured for a specific UE receiving a plurality of PDSCHs for one or more MBS services, an issue that needs to be solved is how to construct the HARQ-ACK codebook when the corresponding HARQ-ACK feedback for the plurality of PDSCHs is to be transmitted in the same slot or sub-slot. The existing Type-1 HARQ-ACK codebook and Type-2 HARQ-ACK codebook are designed for ACK/NACK based HARQ-ACK feedback and cannot support NACK-only based HARQ-ACK feedback.

In some embodiments of the present disclosure, the concept of a sub-slot is introduced to overcome the limitation that some UEs may not be able to transmit more than one PUCCH with HARQ-ACK information in a slot, especially for the ultra-reliable low-latency communication (URLLC) services with stringent requirements. When a sub-slot is supported, one slot can be divided into multiple sub-slots with each sub-slot having the same number of symbols (e.g., 2 symbols), and each sub-slot can be used for a sub-slot based PUCCH transmission.

Moreover, multiplexing multiple NACK-only based HARQ-ACK feedback (e.g., two or more NACKs) in one HARQ-ACK codebook has never been discussed in 3GPP. On the other hand, for a UE supporting multiple MBS services, multiplexing the multiple NACK-only based HARQ-ACK feedback in one HARQ-ACK codebook may occur frequently.

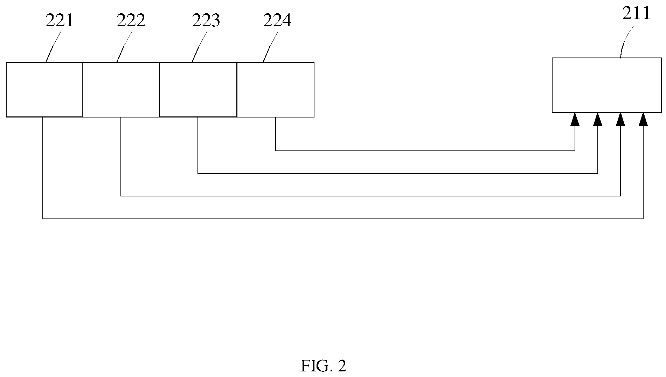

In some embodiments of the present disclosure, several options may be employed by a UE to transmit multiple NACK-only based HARQ-ACK feedback to the BS. These options will be described below with reference to FIG. 2.

FIG. 2 illustrates a conceptual diagram of transmitting multiple NACK-only based HARQ-ACK feedback in the same slot in accordance with some embodiments of the present disclosure. It should be understood that the configurations or parameters mentioned in the following text are only for illustrative purposes, and should not be construed as limiting the embodiments of the present disclosure. Also, details described in all of the foregoing embodiments of the present disclosure are applicable for the embodiments shown in FIG. 2.

Referring to FIG. 2, a UE may receive a plurality of PDSCHs (e.g., PDSCHs 221-224) for carrying one or more multicast services from a BS. The plurality of PDSCHs may be scheduled by associated group-common PDCCHs (e.g., DCIs). The BS may indicate that the corresponding HARQ-ACK feedback for PDSCHs 221-224 is to be transmitted in the same UL slot (e.g., slot 211). When the UE is configured with NACK-only based HARQ-ACK feedback, the UE may employ one of the following options to transmit multiple NACK-only based HARQ-ACK feedback to the BS.

Option 1: the UE may independently transmit multiple PUCCHs for the plurality of PDSCHs in slot 211, where each PUCCH resource corresponds to a corresponding PDSCH. In this option, the UE may need to transmit multiple NACKs in the same slot, one on each PUCCH resource associated with a corresponding PDSCH for which the UE has not successfully decoded.

Option 2: the UE may be configured with multiple PUCCH resources for the plurality of PDSCHs. In some examples, the number of the configured PUCCH resources is 2 to the power of the number of PDSCHs to be transmitted in the same slot. For instance, assuming that there are N PDSCHs with corresponding HARQ-ACK feedback to be transmitted in slot 211, there are $2^N$ possibilities of the HARQ-ACK feedback for the N PDSCHs. As a result, $2^N$ PUCCH resources are configured for the $2^N$ possibilities, and the UE can transmit one of the $2^N$ PUCCH resources which corresponds to the decoding states of the N PDSCHs. In this way, only one PUCCH resource is transmitted in the slot. However, there is a problem that the required PUCCH resources are exponentially increased.

Option 3: each NACK signal may be associated with a subset of HARQ processes. Multiple UEs may use the same PUCCH resource for the NACK-only signal relating to the same subset of HARQ processes. The UE transmits a NACK if at least one process of the associated subset of HARQ processes has a decoding failure and the BS may retransmit all HARQ processes of the subset.

However, the above three options have drawbacks on, for example, UE complexity, PUCCH resource usage and retransmission efficiency. Embodiments of the present disclosure provide solutions to solve the above issues and overcome the above drawbacks. For example, solutions for transmitting NACK-only based HARQ-ACK feedback are proposed. These solutions can, for example, reduce UE complexity and improve the PUCCH resource usage and retransmission efficiency. More details on the embodiments of the present disclosure will be illustrated in the following text in combination with the appended drawings.

Although the above issues and the below solutions are described with respect to a specific network architecture or application scenario (e.g., MBS), it should be appreciated by persons skilled in the art that the above issues may exist in other specific network architectures or application scenarios, and the solutions can still solve the above issues. For example, the solutions for transmitting NACK-only based HARQ-ACK feedback are not only applicable to MBS, but also applicable to other application scenarios that employ the NACK-only based HARQ-ACK feedback transmission scheme.

In some embodiments of the present disclosure, when a BS indicates that the HARQ-ACK feedback for a plurality of PDSCHs is to be transmitted in the same slot or sub-slot, the BS may guarantee that a different PUCCH resource is indicated for each of the plurality of PDSCHs. In other words, when the HARQ-ACK feedback for a plurality of PDSCHs is to be transmitted in the same slot or sub-slot, the UE is configured with different PUCCH resource for each of the plurality of PDSCHs. In the case that the plurality of PDSCHs carry a multicast service(s) for a group of UEs, UEs within the group of UEs may share the PUCCH resource for a specific PDSCH or may be configured with different PUCCH resources for a specific PDSCH. For example, the configuration of PUCCH resources (e.g., whether shared or different among member UEs) may be realized only at the BS side and is transparent to the group of UEs.

In some embodiments of the present disclosure, in the case that a UE generates only a single NACK bit(s) among the HARQ-ACK information bits for the plurality of PDSCHs (for example, only one of the plurality of PDSCHs is incorrectly decoded by the UE), the UE may transmit the single NACK bit(s) on the corresponding PUCCH resource configured by the BS. In the case that the UE generates two or more NACK bits among the HARQ-ACK information bits for the plurality of PDSCHs (for example, two or more of the plurality of PDSCHs are incorrectly decoded by the UE), the UE may multiplex the two or more NACKs on one PUCCH according to one of the following methods.

In some embodiments of the present disclosure, among the HARQ-ACK information bits for the plurality of PDSCHs, a single NACK-only feedback is transmitted by the UE in the corresponding PUCCH resource. The single NACK-only feedback is the first NACK among the HARQ-ACK information bits for the plurality of PDSCHs and the PUCCH resource used for transmitting the single NACK-only feedback is the PUCCH resource associated with the PDSCH acknowledged with the HARQ-ACK feedback of the first NACK among the HARQ-ACK information bits for the plurality of PDSCHs.

Specifically, among the HARQ-ACK information bits for the plurality of PDSCHs, the PUCCH resource associated with the first PDSCH which is not correctly decoded by the UE is determined as the PUCCH resource for transmitting a NACK to the BS. In the case that all of the plurality of PDSCHs are correctly decoded, the UE shall not transmit any ACKs to the BS.

For example, assuming that there are N HARQ-ACK information bits for N PDSCHs (without considering the code block group (CBG) based retransmission and maximum two transport blocks (TBs) per PDSCH), and the first NACK bit is located at the $n^{th}$ bit of the N HARQ-ACK information bits, the PUCCH resource associated with the $n^{th}$ PDSCH may be used for transmitting a NACK to the BS.

The BS may detect the NACK transmission on each of the configured PUCCH resources in the slot. In response to the detection of a PUCCH resource associated with the $n^{th}$ PDSCH, the BS would know that among the N PDSCHs, those PDSCHs transmitted earlier than the $n^{th}$ PDSCH are correctly decoded by the UE, the $n^{th}$ PDSCH is not correctly decoded by the UE, and the decoding states of those PDSCHs transmitted later than the $n^{th}$ PDSCH are not known. The BS may then retransmit TBs carried by the $n^{th}$ PDSCH and the PDSCHs transmitted later than the $n^{th}$ PDSCH in subsequent slots. In other words, the TBs carried by the last $(N-n+1)$ PDSCHs among the N PDSCHs need to be retransmitted. The BS may not need to retransmit TBs carried by those PDSCHs transmitted earlier than the $n^{th}$ PDSCH (e.g., the first $(n-1)$ PDSCHs) to the UE. In the case that all the N PDSCHs are correctly decoded, the UE shall not transmit any ACKs to the BS. In response to detecting nothing on the N PUCCH resources, the BS would know that all the N PDSCHs are correctly by the UE.

In the case that the N PDSCHs carries a multicast service(s) for a group of UEs, each UE in the group of UEs may perform the NACK-only based HARQ-ACK feedback transmission according to the above method. In some embodiments of the present disclosure, although one (e.g., PDSCH #1) of the N PDSCHs is correctly decoded by one UE (e.g., UE #1) in the group of UEs, at least one other UE (e.g., UE #2) in the group of UEs may fail to decode PDSCH #1. The BS may retransmit the PDSCH #1 via, for example, the PTP transmission scheme to the at least one other UE or the PTM transmission scheme 1 to the group of UEs.

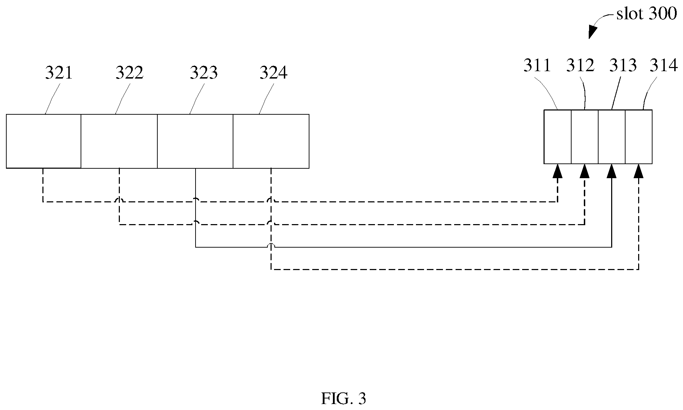

FIG. 3 illustrates a conceptual diagram of transmitting multiple NACK-only based HARQ-ACK feedback in the same slot in accordance with some embodiments of the present disclosure. It should be understood that the configurations or parameters mentioned in the following text are only for illustrative purposes, and should not be construed as limiting the embodiments of the present disclosure. Also, details described in all of the foregoing embodiments of the present disclosure are applicable for the embodiments shown in FIG. 3.

In FIG. 3, a UE may receive a plurality of PDSCHs (e.g., PDSCHs 321-324) for carrying one or more multicast services from a BS and may be configured with NACK-only based HARQ-ACK feedback. The BS may indicate that the corresponding HARQ-ACK feedback for PDSCHs 321-324 is to be transmitted in the same slot (e.g., slot 300). The BS may indicate different PUCCH resources for PDSCHs 321-324. For example, PUCCH 311 may be associated with PDSCH 321, PUCCH 312 may be associated with PDSCH 322, PUCCH 313 may be associated with PDSCH 323, and PUCCH 314 may be associated with PDSCH 324.

Assuming that after decoding, the UE generates four HARQ-ACK information bits (e.g., ACK, ACK, NACK, NACK) for PDSCHs 321-324, respectively. In other words, PDSCHs 321 and 322 are correctly decoded by the UE while PDSCHs 323 and 324 are not correctly decoded by the UE. Since the first NACK among the 4 HARQ-ACK information bits corresponds to PDSCH 323, the UE may transmit a NACK on PUCCH 313 associated with PDSCH 323. As shown in FIG. 3, the dotted line denotes that the UE does not transmit any feedback to the BS while the solid line denotes that the UE transmits the HARQ-ACK feedback to the BS on the corresponding PUCCH resource.

In response to detecting the NACK on PUCCH 313, the BS would know that both PDSCHs 321 and 322 are correctly decoded by the UE while PDSCH 323 is not correctly decoded by the UE and PDSCH 324 is not fed back from the UE. Consequently, the BS will retransmit TBs carried by both PDSCHs 323 and 324 to the UE in a PTP manner or to the group of UEs in a PTM manner. The BS may not need to retransmit TBs carried by both PDSCHs 321 and 322 to the UE in a PTP manner since the UE has correctly decoded both PDSCHs 321 and 322. However, in the case that other UEs report a NACK to PDSCH 321 or 322, the BS may retransmit TBs carried by PDSCH 321 or 322 to those UEs reporting the NACK in a PTP manner or to the group of UEs in a PTM manner.

In some embodiments of the present disclosure, the HARQ-ACK information bits (e.g., NACK or ACK) for the plurality of PDSCHs may be divided into at least one group of HARQ-ACK information bits. For each group of the at least one group, the UE may perform HARQ-ACK bundling among HARQ-ACK information bits in the corresponding group to generate a bundled HARQ-ACK information bit. For example, the HARQ-ACK bundling may be performed by a logic AND operation (or other logic operations) among the HARQ-ACK information bits within a group. The bundled HARQ-ACK information bits of the at least one group may be associated with a PUCCH resource according to a mapping table. The mapping table may be predefined, for example, in standards, or configured by radio resource control (RRC) signaling. The UE may transmit a NACK on the associated PUCCH resource. In the case that all of the plurality of PDSCHs are correctly decoded by the UE, the UE will not transmit any ACKs to the BS.

The number of at least one group of HARQ-ACK information bits can be determined according to various manners. For example, assuming that there are N HARQ-ACK information bits for N PDSCHs (without considering the CBG-based retransmission and maximum two TBs per PDSCH), the N PUCCH resources would have (N+1) states, including the state that the UE does not transmit any feedback signal to the BS (which implies that the UE has correctly decoded all the N PDSCHs). To indicate the (N+1) states, up to $M = \lceil \log_2(N + 1) \rceil$ bits would be needed. To achieve this, the N HARQ-ACK information bits may be compressed to M bits. That is, the number of at least one group is equal to M.

A UE may divide the N HARQ-ACK information bits into M groups according to various manners, including but not limited to the following.

In some examples, each group may include an approximately equal number of HARQ-ACK information bits. For example, each of X group of the M groups may include B HARQ-ACK information bits and each of Y groups of the M groups may include A HARQ-ACK information bits, wherein X = mod(N, M), Y = M - X, $A = \lfloor \frac{N}{M} \rfloor$, $B = \lceil \frac{N}{M} \rceil$. For instance, assuming that N equals 7, M equals 3, X=1, Y=2, A=2, B=3. The UE may divide 7 HARQ-ACK information bits for 7 PDSCHs into 3 groups (e.g., group #1, group #2, and group #3). Group #1 may include the first 3 bits of the 7 HARQ-ACK information bits, group #2 may include the next 2 bits of the 7 HARQ-ACK information bits, and group #3 may include the last 2 bits of the 7 HARQ-ACK information bits.

In some examples, each of the first M-1 groups may include $\lfloor \frac{N}{M} \rfloor$ HARQ-ACK information bits, and the last group may include the remaining HARQ-ACK information bits. For instance, assuming that N equals 7, M equals 3. The UE may divide 7 HARQ-ACK information bits for 7 PDSCHs into 3 groups (e.g., group #1, group #2, and group #3). Group #1 may include the first 2 bits of the 7 HARQ-ACK information bits, group #2 may include the next 2 bits of the 7 HARQ-ACK information bits, and group #3 may include the last 3 bits of the 7 HARQ-ACK information bits.

The UE may then perform HARQ-ACK bundling within each of the M groups to generate M bundled bits. The UE may use a mapping table to map the M bundled bits to a specific PUCCH resource of the N PUCCH resources associated with the N PDSCHs. In this way, the M bundled bits can be indicated by the N PUCCH resources.

The BS may detect the NACK transmission on each of the configured PUCCH resources in the slot. In response to the detection of a NACK transmission on a specific PUCCH resource, the BS can determine the bundled HARQ-ACK information bits for the N PDSCHs according to the mapping table, and thus obtain the decoding status of PDSCHs per group. In response to a bundled HARQ-ACK information bit for a specific group of HARQ-ACK information bits being a NACK, the BS may consider that the PDSCH(s) associated with the group of HARQ-ACK information bits is incorrectly decoded by the UE, and may retransmit TBs carried by these PDSCH(s) to the UE.

Referring again to FIG. 3, the UE may be configured with PUCCHs 311-314 associated with PDSCHs 321-324 with NACK-only based feedback to be transmitted in slot 300. After decoding PDSCHs 321-324, the UE may generate four HARQ-ACK information bits (e.g., NACK or ACK) for PDSCHs 321-324. The UE may divide the four HARQ-ACK information bits into 2 (i.e., $\lceil \log_2(4 + 1) \rceil$) groups of HARQ-ACK information bits. The first group may include the first two HARQ-ACK information bits of the four HARQ-ACK information bits, and the second group may include the last two HARQ-ACK information bits of the four HARQ-ACK information bits.

For example, assuming that the four HARQ-ACK information bits for PDSCHs 321-324 are {ACK, ACK, NACK, NACK}, the four HARQ-ACK information bits may be divided into two groups, e.g., {ACK, ACK} and {NACK, NACK}. The UE may perform HARQ-ACK bundling within each group. For example, the UE may perform a logic AND operation within each of the two groups and may generate two bundled bits of {ACK, NACK}. Then, the UE may determine which one of PUCCHs 311-314 is used for transmitting the NACK based on a mapping table.

For example, Table 1 below shows an exemplary mapping table, which indicates an association between bundled HARQ-ACK information bits and PUCCH resources for transmitting the NACK. It should be understood that Table 1 is only for illustrative purposes, and should not be construed as limiting the embodiments of the present disclosure.

**Table 1: mapping from bundled bits to a PUCCH resource**

| Bundled bits | PUCCH resource |
|---|---|
| {NACK, NACK} | PUCCH 311 |
| {NACK, ACK} | PUCCH 312 |

(continued)

| Bundled bits | PUCCH resource |
|---|---|
| {ACK, NACK} | PUCCH 313 |
| {ACK, ACK} | No PUCCH transmission |

According the above Table 1, the UE may determine to transmit a NACK signal on PUCCH 313 based on the two bundled bits of {ACK, NACK}. As shown in FIG. 3, the dotted line denotes that the UE does not transmit any feedback to the BS while the solid line denotes that the UE transmits the HARQ-ACK feedback to the BS on the corresponding PUCCH resource.

In response to detecting the NACK on PUCCH 313, the BS can determine two bundled bits of {ACK and NACK} based on Table 1. The BS would know that both PDSCHs 321 and 322 are correctly decoded by the UE, while at least one of PDSCHs 323 and 324 is not correctly decoded by the UE. The BS may retransmit TBs carried by PDSCHs 323 and 324 to the UE in a PTP manner or to the group of UEs in a PTM manner. The BS may not need to retransmit TBs carried by both PDSCHs 321 and 322 in a PTP manner since the UE has correctly decoded both PDSCHs 321 and 322. However, in the case that other UEs report a NACK to PDSCH 321 or 322, the BS may retransmit TBs carried by PDSCH 321 or 322 to those UEs reporting the NACK in a PTP manner or to the group of UEs in a PTM manner.

In some embodiments of the present disclosure, instead of dividing the HARQ-ACK information bits for the plurality of PDSCHs, the plurality of PDSCHs may be divided into at least one group of PDSCHs according to the number of the plurality of PDSCHs. For each of the at least one group of PDSCHs, the UE may perform HARQ-ACK bundling among HARQ-ACK information bits for the PDSCHs in a corresponding group of PDSCHs to generate a corresponding bundled HARQ-ACK information bit. Then, the UE may use a mapping table to map the bundled bits to a specific PUCCH resource of the N PUCCH resources associated with the N PDSCHs. The group dividing. HARQ-ACK bundling, and mapping may be performed in a similar manner as described above.

For example, assuming that a UE may receive N PDSCHs with corresponding HARQ-ACK feedback to be transmitted in the same slot, the N PDSCHs may be divided into $M = \lceil \log_2(N + 1) \rceil$ group of PDSCHs. For each of the M groups, the UE may perform HARQ-ACK bundling among HARQ-ACK information bits for the PDSCHs in a corresponding group to generate a corresponding bundled HARQ-ACK information bit. For example, the UE may generate M bundled bits. The UE may then use a mapping table to map the M bundled bits to a specific PUCCH resource of the N PUCCH resources associated with the N PDSCHs. In this way, the M bundled bits can be indicated by the N PUCCH resources.

In response to the detection of a NACK transmission on a specific PUCCH resource, the BS can determine the bundled HARQ-ACK information bits for the N PDSCHs according to the mapping table, and thus obtain the decoding status of PDSCHs per group. In response to a bundled HARQ-ACK information bit of a specific group of PDSCHs being NACK, the BS may consider that the PDSCH(s) within the group of PDSCHs is incorrectly decoded by the UE, and may retransmit TBs carried by these PDSCH(s).

In some embodiments of the present disclosure, in the case that the UE generates two or more NACK bits among the HARQ-ACK information bits for the plurality of PDSCHs (for example, the two or more of the plurality of PDSCHs are incorrectly decoded at the UE), the UE may transmit a single NACK signal on the PUCCH resource associated with the incorrectly decoded PDSCH with the highest priority among the two or more incorrectly decoded PDSCHs. The priority of a PDSCH may be indicated in a corresponding DCI scheduling the PDSCH. In the case that the UE generates a single NACK bit among the HARQ-ACK information bits for the plurality of PDSCHs, the UE may transmit the NACK on the PUCCH resource associated with the incorrectly decoded PDSCH.

In the case that all of the plurality of PDSCHs are correctly decoded, the UE may not transmit any ACKs to the BS. In the case that the incorrectly decoded PDSCHs have the same priority or at least two of the incorrectly decoded PDSCHs have the same highest priority, the UE may select one PUCCH resource associated with one of the incorrectly decoded PDSCHs with the highest priority for transmitting the NACK. The selection may be up to UE's implementation. For example, the UE may perform the selection or according to certain criteria. Different UEs may use the same or different selection methods.

Referring again to FIG. 3, assuming that after decoding, the UE generates four HARQ-ACK information bits (e.g., ACK, NACK, NACK, ACK) for PDSCHs 321-324, respectively. In other words, PDSCHs 321 and 324 are correctly decoded by the UE while PDSCHs 322 and 323 are not correctly decoded by the UE. In the case that the TB carried by PDSCH 323 has a higher priority than another TB carried by PDSCH 322, the UE may transmit a NACK signal on PUCCH resource 313 associated with PDSCH 323. As shown in FIG. 3, the dotted line denotes that the UE does not transmit any feedback to the BS while the solid line denotes that the UE transmits the HARQ-ACK feedback to the BS on the corresponding PUCCH resource.

Upon detection the NACK on PUCCH 313, the BS would know that PDSCH 323 is not correctly decoded by the UE and may assume that the other three PDSCHs are correctly decoded by the UE. Consequently, the BS will retransmit TBs carried by PDSCH 323 to the UE in a PTP manner or to the group of UEs in a PTM manner. The BS may not retransmit TBs carried by PDSCHs 321, 322, and 324 to the UE in a PTP manner. However, in the case that other UEs report a NACK to PDSCH 321, 322 or 323, the BS may retransmit TBs carried by PDSCH 321, 322 or 323 to those UEs reporting the NACK in a PTP manner or to the group of UEs in a PTM manner.

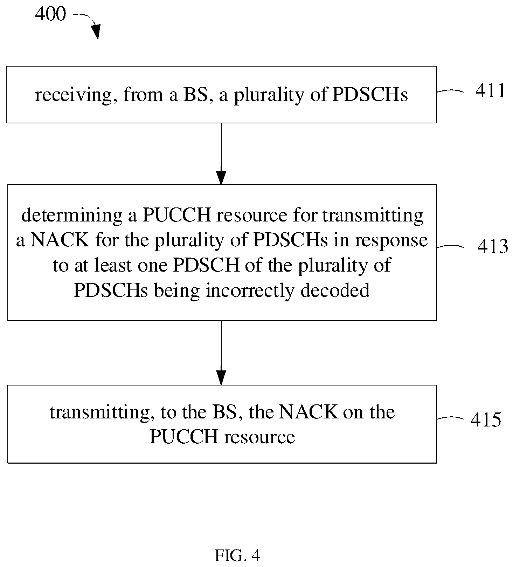

FIG. 4 illustrates a flow chart of an exemplary procedure 400 for wireless communications in accordance with some embodiments of the present disclosure. Details described in all of the foregoing embodiments of the present disclosure are applicable for the embodiments shown in FIG. 4. In some examples, the procedure may be performed by a UE, for example, UE 101 in FIG. 1.

Referring to FIG. 4, in operation 411, a UE may receive, from a BS, a plurality of PDSCHs. Each PDSCH of the plurality of PDSCHs may be associated with a corresponding PUCCH resource for the UE transmitting NACK-based HARQ-ACK feedback. In some embodiments of the present disclosure, different PDSCHs of the plurality of PDSCHs may be associated with different PUCCH resources. For example, the BS may configure N different PUCCH resources associated with N PDSCHs to the UE.

The UE may generate a plurality of HARQ-ACK information bits for the plurality of PDSCHs. For example, in response to the UE correctly decoding a PDSCH, the UE may generate an ACK bit for the PDSCH; and in response to the UE incorrectly decoding a PDSCH, the UE may generate a NACK bit for the PDSCH. In some embodiments of the present disclosure, in response to all of the plurality of PDSCHs being correctly decoded, the UE will not transmit any HARQ-ACK feedback for the plurality of PDSCHs to the BS.

In operation 413, the UE may determine a PUCCH resource for transmitting a NACK for the plurality of PDSCHs in response to at least one PDSCH of the plurality of PDSCHs being incorrectly decoded. In operation 415, the UE may transmit, to the BS, the NACK on the PUCCH resource. In some embodiments of the present disclosure, a single NACK for the plurality of PDSCHs may be transmitted on the determined PUCCH resource.

In some embodiments of the present disclosure, the PUCCH resource for transmitting the NACK for the plurality of PDSCHs is a PUCCH resource associated with a PDSCH acknowledged with the first NACK among the plurality of HARQ-ACK information bits. The UE may receive, from the BS, a retransmission of the PDSCH and PDSCHs of the plurality of PDSCHs with corresponding HARQ-ACK information bits later than the first NACK among the plurality of HARQ-ACK information bits.

In some embodiments of the present disclosure, the UE may divide the plurality of HARQ-ACK information bits into at least one group of HARQ-ACK information bits according to the number of the plurality of PDSCHs. For example, as described above, for N PDSCHs, the UE may divide the plurality of HARQ-ACK information bits into $M = \lfloor \log_2(N+1) \rfloor$ groups of HARQ-ACK information bits.

For each of the at least one group of HARQ-ACK information bits, the UE may perform HARQ-ACK bundling among HARQ-ACK information bits in a corresponding group of HARQ-ACK information bits to generate a bundled HARQ-ACK information bit. For example, for N PDSCHs, the UE may generate M bundled HARQ-ACK information bits.

The PUCCH resource for transmitting the NACK for the plurality of PDSCHs may be determined based on the bundled HARQ-ACK information bits for the at least one group of HARQ-ACK information bits and a mapping table. The mapping table may indicate an association between bundled HARQ-ACK information bits and a PUCCH resource. The mapping table may be predefined, for example, in standards, or configured by RRC signaling.

In response to a bundled HARQ-ACK information bit for a group of HARQ-ACK information bits of the at least one group being a NACK, the UE may receive, from the BS, a retransmission of the PDSCHs associated with the group of HARQ-ACK information bits.

In some embodiments of the present disclosure, the UE may divide the plurality of PDSCHs into at least one group of PDSCHs according to the number of the plurality of PDSCHs. For example, as described above, for N PDSCHs, the UE may divide the plurality of PDSCHs into $M = \lfloor \log_2(N+1) \rfloor$ groups of PDSCHs.

For each of the at least one group of PDSCHs, the UE may perform HARQ-ACK bundling among HARQ-ACK information bits for the PDSCHs in a corresponding group of PDSCHs to generate a bundled HARQ-ACK information bit. For example, for N PDSCHs, the UE may generate M bundled HARQ-ACK information bits.

The PUCCH resource for transmitting the NACK for the plurality of PDSCHs may be determined based on the bundled HARQ-ACK information bits for the at least one group of PDSCHs and a mapping table. The mapping table may indicate an association between bundled HARQ-ACK information bits and a PUCCH resource. The mapping table may be predefined, for example, in standards, or configured by RRC signaling.

In response to a bundled HARQ-ACK information bit for a group of PDSCHs being a NACK, the UE may receive, from the BS, a retransmission of the PDSCHs in the group of PDSCHs.

In some embodiments of the present disclosure, the PUCCH resource for transmitting the NACK for the plurality of PDSCHs may be a PUCCH resource associated with a PDSCH with the highest priority among the at least one PDSCH of the plurality of PDSCHs being incorrectly decoded. In some embodiments of the present disclosure, in response to at least two PDSCHs of the at least one PDSCH having the same highest priority, the PUCCH resource for transmitting the NACK for the plurality of PDSCHs may be a PUCCH resource associated with one of the at least two PDSCHs. The UE may receive, from the BS, a retransmission of the PDSCH with the highest priority among the at least one PDSCH or the one of the at least two PDSCHs.

It should be appreciated by persons skilled in the art that the sequence of the operations in exemplary procedure 400 may be changed and some of the operations in exemplary procedure 400 may be eliminated or modified, without departing from the spirit and scope of the disclosure.

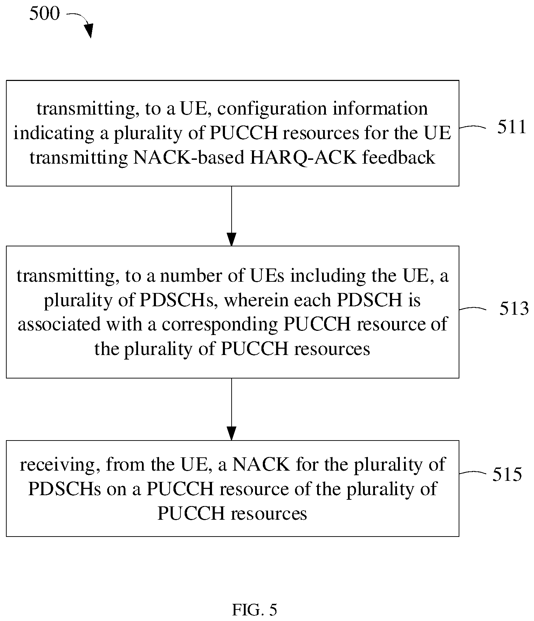

FIG. 5 illustrates a flow chart of an exemplary procedure 500 for wireless communications in accordance with some embodiments of the present disclosure. Details described in all of the foregoing embodiments of the present disclosure are applicable for the embodiments shown in FIG. 5. In some examples, the procedure may be performed by a BS, for example, BS 102 in FIG. 1.

Referring to FIG. 5, in operation 511, a BS may transmit, to a UE, configuration information indicating a plurality of PUCCH resources for the UE transmitting NACK-based HARQ-ACK feedback.

In operation 513, the BS may transmit, to a number of UEs including the UE, a plurality of PDSCHs, wherein each PDSCH is associated with a corresponding PUCCH resource of the plurality of PUCCH resources. In some embodiments of the present disclosure, different PDSCHs of the plurality of PDSCHs may be associated with different PUCCH resources of the plurality of PUCCH resources. For example, the BS may configure N different PUCCH resources associated with N PDSCHs to the UE.

In operation 515, the BS may receive, from the UE, a NACK for the plurality of PDSCHs on a PUCCH resource of the plurality of PUCCH resources. In some embodiments of the present disclosure, a single NACK for the plurality of PDSCHs may be received from the UE on the PUCCH resource. In some embodiments of the present disclosure, the BS may not receive any HARQ-ACK feedback for the plurality of PDSCHs from the UE in response to all of the plurality of PDSCHs being correctly decoded by the UE.

In some embodiments of the present disclosure, the PUCCH resource may be a PUCCH resource associated with a PDSCH of the plurality of PDSCHs firstly acknowledged by the UE with a NACK. The BS may retransmit, to the UE, the PDSCH and PDSCHs of the plurality of PDSCHs with corresponding HARQ-ACK information bits later than the NACK firstly acknowledged by the UE.

In some embodiments of the present disclosure, the BS may determine at least one bundled HARQ-ACK information bit based on a mapping table in response to receiving the NACK on the PUCCH resource. The mapping table may indicate an association between bundled HARQ-ACK information bits and a PUCCH resource. The mapping table may be predefined, for example, in standards, or configured by RRC signaling.

In some embodiments of the present disclosure, in response to a bundled HARQ-ACK information bit of the at least one bundled HARQ-ACK information bit being a NACK, the BS may determine at least one PDSCH of the plurality of PDSCHs associated with the bundled HARQ-ACK information bit. The BS may retransmitting the at least one PDSCH to the UE.

In some embodiments of the present disclosure, the PUCCH resource may be a PUCCH resource associated with a PDSCH with the highest priority among at least one PDSCH of the plurality of PDSCHs being incorrectly decoded by the UE. In some embodiments of the present disclosure, the BS may retransmit, to the UE, a PDSCH of the plurality of PDSCHs associated with the PUCCH resource.

It should be appreciated by persons skilled in the art that the sequence of the operations in exemplary procedure 500 may be changed and some of the operations in exemplary procedure 500 may be eliminated or modified, without departing from the spirit and scope of the disclosure.

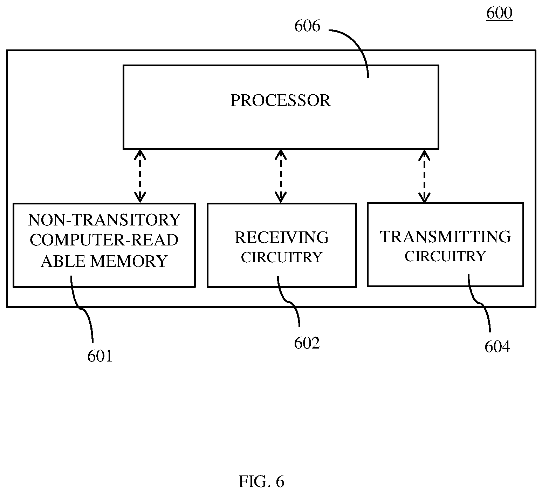

FIG. 6 illustrates a block diagram of an exemplary apparatus 600 according to some embodiments of the present disclosure.

As shown in FIG. 6, the apparatus 600 may include at least one non-transitory computer-readable medium 601, at least one receiving circuitry 602, at least one transmitting circuitry 604, and at least one processor 606 coupled to the non-transitory computer-readable medium 601, the receiving circuitry 602 and the transmitting circuitry 604. The apparatus 600 may be a base station side apparatus (e.g., a BS) or a communication device (e.g., a UE).

Although in this figure, elements such as the at least one processor 606, transmitting circuitry 604, and receiving circuitry 602 are described in the singular, the plural is contemplated unless a limitation to the singular is explicitly stated. In some embodiments of the present application, the receiving circuitry 602 and the transmitting circuitry 604 are combined into a single device, such as a transceiver. In certain embodiments of the present application, the apparatus 600 may further include an input device, a memory, and/or other components.

In some embodiments of the present disclosure, the non-transitory computer-readable medium 601 may have stored thereon computer-executable instructions to cause a processor to implement the method with respect to the UEs as described above. For example, the computer-executable instructions, when executed, cause the processor 606 interacting with receiving circuitry 602 and transmitting circuitry 604, so as to perform the operations with respect to the UEs described in FIGS. 1-5.

In some embodiments of the present disclosure, the non-transitory computer-readable medium 601 may have stored thereon computer-executable instructions to cause a processor to implement the method with respect to the BSs as described above. For example, the computer-executable instructions, when executed, cause the processor 606 interacting with receiving circuitry 602 and transmitting circuitry 604, so as to perform the operations with respect to the BSs described in FIGS. 1-5.

Those having ordinary skill in the art would understand that the operations or steps of a method described in connection with the aspects disclosed herein may be embodied directly in hardware, in a software module executed by a processor, or in a combination of the two. A software module may reside in RAM memory, flash memory, ROM memory, EPROM memory. EEPROM memory, registers, a hard disk, a removable disk, a CD-ROM, or any other form of storage medium known in the art. Additionally, in some aspects, the operations or steps of a method may reside as one or any combination or set of codes and/or instructions on a non-transitory computer-readable medium, which may be incorporated into a computer program product.

While this disclosure has been described with specific embodiments thereof, it is evident that many alternatives, modifications, and variations may be apparent to those skilled in the art. For example, various components of the embodiments may be interchanged, added, or substituted in other embodiments. Also, all of the elements of each figure are not necessary for the operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. Various changes may be made without departing from the scope of the claims.

In this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The term "having" and the like, as used herein, are defined as "including." Expressions such as "A and/or B" or "at least one of A and B" may include any and all combinations of words enumerated along with the expression. For instance, the expression "A and/or B" or "at least one of A and B" may include A, B, or both A and B. The wording "the first," "the second" or the like is only used to clearly illustrate the embodiments of the present application, but is not used to limit the substance of the present application.

## Claims

1.  A user equipment, UE, (101, 600) for wireless communications, the UE (101, 600) comprising:

    at least one memory (601); and
    at least one processor (606) coupled with at least one memory (601) and configured to cause the UE (101, 600) to:

    receive, from a base station, BS, (102), a plurality of physical downlink shared channels, PDSCHs, transmitted by the BS (102) to a number of UEs including the UE (101), wherein each PDSCH is associated with a corresponding physical uplink control channel, PUCCH, resource for the UE (101, 600) to transmit negative acknowledgement, NACK, -based hybrid automatic repeat request acknowledgement, HARQ-ACK, feedback;
    in response to at least two PDSCHs of the plurality of PDSCHs not being correctly decoded, determine a PUCCH resource for transmitting a NACK for said at least two PDSCHs; and
    transmit, to the BS (102), a single NACK for said at least two PDSCHs on the PUCCH resource,
    the processor (606) being configured such that no HARQ-ACK feedback for the plurality of PDSCHs is transmitted in response to all of the plurality of PDSCHs being correctly decoded.

2.  The UE (101, 600) of claim 1, wherein the at least one processor (606) is configured to cause the UE (101, 600) to:
    generate a plurality of HARQ-ACK information bits for said at least two PDSCHs.

3.  The UE (101, 600) of claim 2, wherein the PUCCH resource for transmitting the NACK for said at least two PDSCHs is a PUCCH resource associated with a PDSCH acknowledged with the first NACK among the plurality of HARQ-ACK information bits.

4.  The UE (101, 600) of claim 3, wherein the at least one processor (606) is configured to cause the UE (101, 600) to:
    receive, from the BS (102), a retransmission of the PDSCH and PDSCHs of the plurality of PDSCHs with corresponding HARQ-ACK information bits later than the first NACK among the plurality of HARQ-ACK information bits.

5. The UE (101, 600) of claim 2, wherein the at least one processor (606) is configured to cause the UE (101, 600) to:

   divide the plurality of HARQ-ACK information bits into at least one group of HARQ-ACK information bits according to the number of the plurality of PDSCHs; and
   for each of the at least one group of HARQ-ACK information bits, perform HARQ-ACK bundling among HARQ-ACK information bits in a corresponding group of HARQ-ACK information bits to generate a bundled HARQ-ACK information bit.

6. The UE (101, 600) of claim 5, wherein the at least one processor (606) is configured to cause the UE (101, 600) to: in response to a bundled HARQ-ACK information bit for a group of HARQ-ACK information bits being a NACK, receive, from the BS (102), a retransmission of PDSCHs associated with the group of HARQ-ACK information bits.

7. The UE (101, 600) of claim 2, wherein the at least one processor (606) is configured to cause the UE (101, 600) to:

   divide the plurality of PDSCHs into at least one group of PDSCHs according to the number of the plurality of PDSCHs; and
   for each of the at least one group of PDSCHs, perform HARQ-ACK bundling among HARQ-ACK information bits for PDSCHs in a corresponding group of PDSCHs to generate a bundled HARQ-ACK information bit.

8. The UE (101, 600) of claim 7, wherein the at least one processor (606) is configured to cause the UE (101, 600) to: in response to a bundled HARQ-ACK information bit for a group of PDSCHs being a NACK, receive, from the BS (102), a retransmission of PDSCHs in the group of PDSCHs.

9. The UE (101, 600) of claim 5 or 7, wherein the PUCCH resource for transmitting the NACK for the plurality of PDSCHs is determined based on the bundled HARQ-ACK information bits for the at least one group and a mapping table.

10. The UE (101, 600) of claim 1, wherein the PUCCH resource for transmitting the NACK for the plurality of PDSCHs is a PUCCH resource associated with a PDSCH with the highest priority among the at least one PDSCH of the plurality of PDSCHs not being correctly decoded; or
    wherein in response to at least two PDSCHs of the at least one PDSCH having the same highest priority, the PUCCH resource for transmitting the NACK for the plurality of PDSCHs is a PUCCH resource associated with one of the at least two PDSCHs.

11. The UE (101, 600) of claim 10, wherein the at least one processor (606) is configured to cause the UE (101, 600) to: receive, from the BS (102), a retransmission of the PDSCH with the highest priority among the at least one PDSCH or the one of the at least two PDSCHs.

12. A method for wireless communications performed by a user equipment, UE, (101), the method comprising:

    receiving, from a base station, BS, (102), a plurality of physical downlink shared channels, PDSCHs, transmitted by the BS (102) to a number of UEs including the UE (101), wherein each PDSCH is associated with a corresponding physical uplink control channel, PUCCH, resource for the UE (101) to transmit negative acknowledgement, NACK, -based hybrid automatic repeat request acknowledgement, HARQ-ACK, feedback;
    in response to at least two PDSCHs of the plurality of PDSCHs not being correctly decoded, determining a PUCCH resource for transmitting a NACK for said at least two PDSCHs;
    transmitting, to the BS (102), a single NACK for said at least two PDSCHs on the PUCCH resource; and
    not transmitting any HARQ-ACK feedback for the plurality of PDSCHs in response to all of the plurality of PDSCHs being correctly decoded.

13. A base station, BS, (102) for wireless communications, the BS (102) comprising:

    at least one memory (601); and
    at least one processor (606) coupled with at least one memory (601) and configured to cause the BS (102) to:

    transmit, to a user equipment, UE, (101), configuration information indicating a plurality of physical uplink control channel, PUCCH, resources for the UE (101) to transmit negative acknowledgement, NACK, -based hybrid automatic repeat request acknowledgement, HARQ-ACK, feedback;

transmit, to a number of UEs including the UE (101), a plurality of physical downlink shared channels, PDSCHs, wherein each PDSCH is associated with a corresponding PUCCH resource of the plurality of PUCCH resources;

receive, from the UE (101) on a PUCCH resource of the plurality of PUCCH, a single NACK for at least two PDSCHs of the plurality of PDSCHs that have not been correctly decoded by the UE (101); and

do not receive any HARQ-ACK feedback for the plurality of PDSCHs in response to all of the plurality of PDSCHs being correctly decoded by the UE (101).

14. A method for wireless communications performed by a base station, BS, (102), the method comprising:

transmitting, to a user equipment, UE, (101), configuration information indicating a plurality of physical uplink control channel, PUCCH, resources for the UE (101) to transmit negative acknowledgement, NACK, -based hybrid automatic repeat request acknowledgement, HARQ-ACK, feedback;

transmitting, to a number of UEs including the UE (101), a plurality of physical downlink shared channels, PDSCHs, wherein each PDSCH is associated with a corresponding PUCCH resource of the plurality of PUCCH resources;

receiving, from the UE (101) on a PUCCH resource of the plurality of PUCCH, a single NACK for at least two PDSCHs of the plurality of PDSCHs that have not been correctly decoded by the UE (101); and

not receiving any HARQ-ACK feedback for the plurality of PDSCHs in response to all of the plurality of PDSCHs being correctly decoded by the UE (101).

15. A computer program product comprising instructions which, when the program is executed by a computer, cause the computer to carry out the method of claim 12.


**Patentansprüche**

1. Ein Benutzergerät (UE) (101, 600) für drahtlose Kommunikation, wobei das UE (101, 600) umfasst:

- mindestens einen Speicher (601); und
- mindestens einen Prozessor (606), der mit dem mindestens einen Speicher (601) gekoppelt ist und dazu ausgebildet ist, das UE (101, 600) zu veranlassen,

-- von einer Basisstation (BS) (102) eine Mehrzahl physischer Downlink-Shared-Kanäle (PDSCH) zu empfangen, die von der BS (102) an eine Anzahl von UEs einschließlich des UE (101) übertragen werden, **dadurch gekennzeichnet, dass** jedem PDSCH eine entsprechende Ressource eines physischen Uplink-Steuerkanals (PUCCH) zugeordnet ist, über welche das UE (101, 600) eine auf negativer Bestätigung (NACK) basierende Hybrid-Automatic-Repeat-Request-Bestätigungsrückmeldung (HARQ-ACK) übermitteln kann;
-- in Reaktion darauf, dass mindestens zwei PDSCHs der Mehrzahl der PDSCHs nicht korrekt dekodiert werden, eine PUCCH-Ressource zum Übermitteln eines NACK für die mindestens zwei PDSCHs zu bestimmen; und
-- an die BS (102) ein einzelnes NACK für die mindestens zwei PDSCHs auf der PUCCH-Ressource zu übermitteln;

wobei der Prozessor (606) derart konfiguriert ist, dass keine HARQ-ACK-Rückmeldung für die Mehrzahl der PDSCHs übermittelt wird, wenn alle PDSCHs der Mehrzahl korrekt dekodiert werden.

2. Ein Benutzergerät (UE) (101, 600) nach Anspruch 1, wobei der mindestens eine Prozessor (606) dazu ausgebildet ist, das UE (101, 600) zu veranlassen, eine Mehrzahl von HARQ-ACK-Informationsbits für die mindestens zwei PDSCHs zu erzeugen.

3. Ein Benutzergerät (UE) (101, 600) nach Anspruch 2, wobei die PUCCH-Ressource zum Übermitteln des NACK für die mindestens zwei PDSCHs eine PUCCH-Ressource ist, die einem PDSCH zugeordnet ist, das mit dem ersten NACK unter der Mehrzahl der HARQ-ACK-Informationsbits bestätigt wird.

4. Ein Benutzergerät (UE) (101, 600) nach Anspruch 3, **dadurch gekennzeichnet, dass** der mindestens eine Prozessor (606) dazu ausgebildet ist, das UE (101, 600) zu veranlassen, von der BS (102) eine erneute Übertragung des PDSCH sowie der PDSCHs der Mehrzahl zu empfangen, deren entsprechende HARQ-ACK-Informationsbits später als das erste NACK unter der Mehrzahl der HARQ-ACK-Informationsbits liegen.

5. Ein Benutzergerät (UE) (101, 600) nach Anspruch 2, wobei der mindestens eine Prozessor (606) dazu ausgebildet ist, das UE (101, 600) zu veranlassen,

   - die Mehrzahl der HARQ-ACK-Informationsbits gemäß der Anzahl der Mehrzahl der PDSCHs in mindestens eine Gruppe von HARQ-ACK-Informationsbits zu unterteilen und
   - für jede der mindestens einen Gruppe von HARQ-ACK-Informationsbits eine HARQ-ACK-Bündelung zwischen HARQ-ACK-Informationsbits in einer entsprechenden Gruppe von HARQ-ACK-Informationsbits durchzuführen, um ein gebündeltes HARQ-ACK-Informationsbit zu erzeugen.

6. Ein Benutzergerät (UE) (101, 600) nach Anspruch 5, wobei der mindestens eine Prozessor (606) dazu ausgebildet ist, das UE (101, 600) zu veranlassen, in Reaktion darauf, dass ein gebündeltes HARQ-ACK-Informationsbit für eine Gruppe von HARQ-ACK-Informationsbits ein NACK ist, von der BS (102) eine erneute Übertragung von PDSCHs zu empfangen, die der Gruppe von HARQ-ACK-Informationsbits zugeordnet sind.

7. Ein Benutzergerät (UE) (101, 600) nach Anspruch 2, wobei der mindestens eine Prozessor (606) dazu ausgebildet ist, das UE (101, 600) zu veranlassen,

   - die Mehrzahl der PDSCHs gemäß der Anzahl der Mehrzahl der PDSCHs in mindestens eine Gruppe von PDSCHs zu unterteilen und
   - für jede der mindestens einen Gruppe von PDSCHs eine HARQ-ACK-Bündelung zwischen HARQ-ACK-Informationsbits für PDSCHs in einer entsprechenden Gruppe von PDSCHs durchzuführen, um ein gebündeltes HARQ-ACK-Informationsbit zu erzeugen.

8. Ein Benutzergerät (UE) (101, 600) nach Anspruch 7, wobei der mindestens eine Prozessor (606) dazu ausgebildet ist, das UE (101, 600) zu veranlassen, in Reaktion darauf, dass ein gebündeltes HARQ-ACK-Informationsbit für eine Gruppe von PDSCHs ein NACK ist, von der BS (102) eine erneute Übertragung von PDSCHs in der Gruppe von PDSCHs zu empfangen.

9. Ein Benutzergerät (UE) (101, 600) nach Anspruch 5 oder 7, wobei die PUCCH-Ressource zum Übermitteln des NACK für die Mehrzahl der PDSCHs auf der Grundlage der gebündelten HARQ-ACK-Informationsbits für die mindestens eine Gruppe und einer Zuordnungstabelle bestimmt wird.

10. Ein Benutzergerät (UE) (101, 600) nach Anspruch 1,

    - **dadurch gekennzeichnet, dass** die PUCCH-Ressource zum Übermitteln des NACK für die Mehrzahl der PDSCHs eine PUCCH-Ressource ist, die einem PDSCH mit der höchsten Priorität unter den mindestens zwei PDSCHs der Mehrzahl, die nicht korrekt dekodiert wurden, zugeordnet ist; oder
    - **dadurch gekennzeichnet, dass**, in Reaktion darauf, dass mindestens zwei PDSCHs unter den mindestens zwei PDSCHs dieselbe höchste Priorität aufweisen, die PUCCH-Ressource zum Übermitteln des NACK für die Mehrzahl der PDSCHs eine PUCCH-Ressource ist, die einem der mindestens zwei PDSCHs zugeordnet ist.

11. Ein Benutzergerät (UE) (101, 600) nach Anspruch 10, wobei der mindestens eine Prozessor (606) dazu ausgebildet ist, das UE (101, 600) zu veranlassen, von der BS (102) eine erneute Übertragung des PDSCH mit der höchsten Priorität unter den mindestens zwei PDSCHs oder desjenigen der mindestens zwei PDSCHs zu empfangen.

12. Ein Verfahren für drahtlose Kommunikation, ausgeführt durch ein Benutzergerät (UE) (101), **dadurch gekennzeichnet, dass** das Verfahren umfasst:

    - von einer Basisstation (BS) (102) eine Mehrzahl physischer Downlink-Shared-Kanäle (PDSCH) zu empfangen, die von der BS (102) an eine Anzahl von UEs einschließlich des UE (101) übertragen werden, wobei jedem PDSCH eine entsprechende Ressource eines physischen Uplink-Steuerkanals (PUCCH) zugeordnet ist, über welche das UE (101) eine auf negativer Bestätigung (NACK) basierende Hybrid-Automatic-Repeat-Request-Bestätigungsrückmeldung (HARQ-ACK) übermitteln kann;

- in Reaktion darauf, dass mindestens zwei PDSCHs der Mehrzahl der PDSCHs nicht korrekt dekodiert werden, eine PUCCH-Ressource zum Übermitteln eines NACK für die mindestens zwei PDSCHs zu bestimmen;
- an die BS (102) ein einzelnes NACK für die mindestens zwei PDSCHs auf der PUCCH-Ressource zu übermitteln; und
- keine HARQ-ACK-Rückmeldung für die Mehrzahl der PDSCHs zu übermitteln, wenn alle PDSCHs der Mehrzahl korrekt dekodiert werden.

**13.** Eine Basisstation (BS) (102) für drahtlose Kommunikation, wobei die BS (102) umfasst:

- mindestens einen Speicher (601); und
- mindestens einen Prozessor (606), der mit dem mindestens einen Speicher (601) gekoppelt ist und dazu ausgebildet ist, die BS (102) zu veranlassen,

-- an ein Benutzergerät (UE) (101) Konfigurationsinformationen zu übertragen, die eine Mehrzahl von Ressourcen des physischen Uplink-Steuerkanals (PUCCH) für das UE (101) angeben, um eine auf negativer Bestätigung (NACK) basierende Hybrid-Automatic-Repeat-Request-Bestätigungsrückmeldung (HARQ-ACK) zu übermitteln;
-- an eine Anzahl von UEs einschließlich des UE (101) eine Mehrzahl physischer Downlink-Shared-Kanäle (PDSCH) zu übertragen, wobei jedem PDSCH eine entsprechende PUCCH-Ressource der Mehrzahl von PUCCH-Ressourcen zugeordnet ist;
-- von dem UE (101) auf einer PUCCH-Ressource der Mehrzahl von PUCCH-Ressourcen ein einzelnes NACK für mindestens zwei PDSCHs der Mehrzahl von PDSCHs zu empfangen, die vom UE (101) nicht korrekt dekodiert wurden; und
-- keine HARQ-ACK-Rückmeldung für die Mehrzahl der PDSCHs zu empfangen, wenn alle PDSCHs der Mehrzahl vom UE (101) korrekt dekodiert wurden.

**14.** Ein Verfahren für drahtlose Kommunikation, ausgeführt durch eine Basisstation (BS) (102), wobei das Verfahren umfasst:

- an ein Benutzergerät (UE) (101) Konfigurationsinformationen zu übertragen, die eine Mehrzahl von Ressourcen des physischen Uplink-Steuerkanals (PUCCH) für das UE (101) angeben, um eine auf negativer Bestätigung (NACK) basierende Hybrid-Automatic-Repeat-Request-Bestätigungsrückmeldung (HARQ-ACK) zu übermitteln;
- an eine Anzahl von UEs einschließlich des UE (101) eine Mehrzahl physischer Downlink-Shared-Kanäle (PDSCH) zu übertragen, wobei jedem PDSCH eine entsprechende PUCCH-Ressource der Mehrzahl von PUCCH-Ressourcen zugeordnet ist;
- von dem UE (101) auf einer PUCCH-Ressource der Mehrzahl von PUCCH-Ressourcen ein einzelnes NACK für mindestens zwei PDSCHs der Mehrzahl von PDSCHs zu empfangen, die vom UE (101) nicht korrekt dekodiert wurden; und
- keine HARQ-ACK-Rückmeldung für die Mehrzahl der PDSCHs zu empfangen, wenn alle PDSCHs der Mehrzahl vom UE (101) korrekt dekodiert wurden.

**15.** Ein Computerprogrammprodukt, durch Anweisungen gekennzeichnet, die, wenn das Programm von einem Computer ausgeführt wird, den Computer veranlassen, das Verfahren nach Anspruch 12 auszuführen.

**Revendications**

**1.** Équipement utilisateur, UE, (101, 600) pour communications sans fil, l'UE (101, 600) comprenant :

au moins une mémoire (601) ; et
au moins un processeur (606) couplé à au moins une mémoire (601) et configuré pour amener l'UE (101, 600) à :

recevoir, à partir d'une station de base, BS, (102), une pluralité de canaux physiques partagés de liaison descendante, PDSCH, transmis par la BS (102) à un nombre d'UE, y compris l'UE (101), où chaque PDSCH est associé à une ressource de canal de contrôle physique de liaison montante, PUCCH, correspondante pour que l'UE (101, 600) transmette une rétro-signalisation d'accusé de réception de requête de répétition automatique hybride, HARQ-ACK, basée sur un accusé de réception négatif, NACK ;

en réponse au fait qu'au moins deux PDSCH de la pluralité de PDSCH ne sont pas correctement décodés, déterminer une ressource PUCCH pour transmettre un NACK pour lesdits au moins deux PDSCH ; et transmettre, à la BS (102), un seul NACK pour lesdits au moins deux PDSCH sur la ressource PUCCH, le processeur (606) étant configuré de telle sorte qu'aucune rétro-signalisation HARQ-ACK pour la pluralité de PDSCH n'est transmise en réponse au fait que tous les PDSCH de la pluralité sont correctement décodés.

2. UE (101, 600) selon la revendication 1, où l'au moins un processeur (606) est configuré pour amener l'UE (101, 600) à :
générer une pluralité de bits d'information HARQ-ACK pour lesdits au moins deux PDSCH.

3. UE (101, 600) selon la revendication 2, où la ressource PUCCH pour transmettre le NACK pour lesdits au moins deux PDSCH est une ressource PUCCH associée à un PDSCH accusé avec le premier NACK parmi la pluralité de bits d'information HARQ-ACK.

4. UE (101, 600) selon la revendication 3, où l'au moins un processeur (606) est configuré pour amener l'UE (101, 600) à :
recevoir, à partir de la BS (102), une retransmission du PDSCH et des PDSCH de la pluralité de PDSCH avec des bits d'information HARQ-ACK correspondants postérieurs au premier NACK parmi la pluralité de bits d'information HARQ-ACK.

5. UE (101, 600) selon la revendication 2, où l'au moins un processeur (606) est configuré pour amener l'UE (101, 600) à :

diviser la pluralité de bits d'information HARQ-ACK en au moins un groupe de bits d'information HARQ-ACK en fonction du nombre de la pluralité de PDSCH ; et
pour chacun de l'au moins un groupe de bits d'information HARQ-ACK, effectuer un regroupement HARQ-ACK parmi les bits d'information HARQ-ACK dans un groupe correspondant de bits d'information HARQ-ACK afin de générer un bit d'information HARQ-ACK regroupé.

6. UE (101, 600) selon la revendication 5, où l'au moins un processeur (606) est configuré pour amener l'UE (101, 600) à :
en réponse au fait qu'un bit d'information HARQ-ACK regroupé pour un groupe de bits d'information HARQ-ACK est un NACK, recevoir, à partir de la BS (102), une retransmission de PDSCH associés au groupe de bits d'information HARQ-ACK.

7. UE (101, 600) selon la revendication 2, où l'au moins un processeur (606) est configuré pour amener l'UE (101, 600) à :

diviser la pluralité de PDSCH en au moins un groupe de PDSCH en fonction du nombre de la pluralité de PDSCH ; et
pour chacun de l'au moins un groupe de PDSCH, effectuer un regroupement HARQ-ACK parmi les bits d'information HARQ-ACK pour les PDSCH dans un groupe correspondant de PDSCH afin de générer un bit d'information HARQ-ACK regroupé.

8. UE (101, 600) selon la revendication 7, où l'au moins un processeur (606) est configuré pour amener l'UE (101, 600) à :
en réponse au fait qu'un bit d'information HARQ-ACK regroupé pour un groupe de PDSCH est un NACK, recevoir, à partir de la BS (102), une retransmission de PDSCH dans le groupe de PDSCH.

9. UE (101, 600) selon la revendication 5 ou 7, où la ressource PUCCH pour transmettre le NACK pour la pluralité de PDSCH est déterminée sur la base des bits d'information HARQ-ACK regroupés pour l'au moins un groupe et d'une table de mappage.

10. UE (101, 600) selon la revendication 1, où la ressource PUCCH pour transmettre le NACK pour la pluralité de PDSCH est une ressource PUCCH associée à un PDSCH ayant la priorité la plus élevée parmi l'au moins un PDSCH de la pluralité de PDSCH qui n'est pas correctement décodé ; ou
où, en réponse au fait qu'au moins deux PDSCH de l'au moins un PDSCH ont la même priorité la plus élevée, la ressource PUCCH pour transmettre le NACK pour la pluralité de PDSCH est une ressource PUCCH associée à l'un des au moins deux PDSCH.

11. UE (101, 600) selon la revendication 10, où l'au moins un processeur (606) est configuré pour amener l'UE (101, 600) à :

recevoir, à partir de la BS (102), une retransmission du PDSCH ayant la priorité la plus élevée parmi l'au moins un PDSCH ou l'un des au moins deux PDSCH.

12. Procédé pour communications sans fil effectué par un équipement utilisateur, UE, (101), le procédé comprenant :

la réception, à partir d'une station de base, BS, (102), d'une pluralité de canaux physiques partagés de liaison descendante, PDSCH, transmis par la BS (102) à un nombre d'UE, y compris l'UE (101), où chaque PDSCH est associé à une ressource de canal de contrôle physique de liaison montante, PUCCH, correspondante pour que l'UE (101, 600) transmette une rétro-signalisation d'accusé de réception de requête de répétition automatique hybride, HARQ-ACK, basée sur un accusé de réception négatif, NACK ;
en réponse au fait qu'au moins deux PDSCH de la pluralité de PDSCH ne sont pas correctement décodés, la détermination d'une ressource PUCCH pour transmettre un NACK pour lesdits au moins deux PDSCH ; et
la transmission, à la BS (102), d'un seul NACK pour lesdits au moins deux PDSCH sur la ressource PUCCH, et la transmission d'aucune rétro-signalisation HARQ-ACK pour la pluralité de PDSCH en réponse au fait que tous les PDSCH de la pluralité sont correctement décodés.

13. Station de base, BS, (102) pour communications sans fil, la BS (102) comprenant :

au moins une mémoire (601) ; et
au moins un processeur (606) couplé à au moins une mémoire (601) et configuré pour amener la BS (102) à :

transmettre, à un équipement utilisateur, UE, (101), des informations de configuration indiquant une pluralité de ressources de canal de contrôle physique de liaison montante, PUCCH, pour que l'UE (101) transmette une rétro-signalisation d'accusé de réception de requête de répétition automatique hybride, HARQ-ACK, basée sur un accusé de réception négatif, NACK ;
transmettre, à un nombre d'UE, y compris l'UE (101), une pluralité de canaux physiques partagés de liaison descendante, PDSCH, où chaque PDSCH est associé à une ressource PUCCH correspondante de la pluralité de ressources PUCCH ;
recevoir, à partir de l'UE (101) sur une ressource PUCCH de la pluralité de PUCCH, un seul NACK pour au moins deux PDSCH de la pluralité de PDSCH qui ne sont pas correctement décodés par l'UE (101) ; et
ne pas recevoir de rétro-signalisation HARQ-ACK pour la pluralité de PDSCH en réponse au fait que tous les PDSCH de la pluralité sont correctement décodés par l'UE (101).

14. Procédé pour communications sans fil effectué par une station de base, BS, (102), le procédé comprenant :

la transmission, à un équipement utilisateur, UE, (101), d'informations de configuration indiquant une pluralité de ressources de canal de contrôle physique de liaison montante, PUCCH, pour que l'UE (101) transmette une rétro-signalisation d'accusé de réception de requête de répétition automatique hybride, HARQ-ACK, basée sur un accusé de réception négatif, NACK ;
la transmission, à un nombre d'UE, y compris l'UE (101), d'une pluralité de canaux physiques partagés de liaison descendante, PDSCH, où chaque PDSCH est associé à une ressource PUCCH correspondante de la pluralité de ressources PUCCH ;
la réception, à partir de l'UE (101) sur une ressource PUCCH de la pluralité de PUCCH, d'un seul NACK pour au moins deux PDSCH de la pluralité de PDSCH qui ne sont pas correctement décodés par l'UE (101) ; et
la réception d'aucune rétro-signalisation HARQ-ACK pour la pluralité de PDSCH en réponse au fait que tous les PDSCH de la pluralité sont correctement décodés par l'UE (101).

15. Produit programme informatique comprenant des instructions qui, lorsque le programme est exécuté par un ordinateur, amènent l'ordinateur à mettre en oeuvre le procédé selon la revendication 12.

FIG. 1

221 222 223 224 211

FIG. 2

FIG. 3

400

```
┌─────────────────────────────────────────┐
│                                         │
│  receiving, from a BS, a plurality of   │──── 411
│           PDSCHs                        │
│                                         │
└─────────────────────────────────────────┘
                    │
                    ▼
┌─────────────────────────────────────────┐
│                                         │
│  determining a PUCCH resource for       │
│  transmitting a NACK for the plurality  │
│  of PDSCHs in response to at least one  │──── 413
│  PDSCH of the plurality of PDSCHs       │
│  being incorrectly decoded              │
│                                         │
└─────────────────────────────────────────┘
                    │
                    ▼
┌─────────────────────────────────────────┐
│                                         │
│  transmitting, to the BS, the NACK on   │──── 415
│         the PUCCH resource              │
│                                         │
└─────────────────────────────────────────┘
```

FIG. 4

500 ⌐

┌─────────────────────────────────────────────────┐
│  transmitting, to a UE, configuration information  │
│  indicating a plurality of PUCCH resources for the UE │ ⌐ 511
│  transmitting NACK-based HARQ-ACK feedback        │
└─────────────────────────────────────────────────┘

┌─────────────────────────────────────────────────┐
│  transmitting, to a number of UEs including the UE, a │
│  plurality of PDSCHs, wherein each PDSCH is        │
│  associated with a corresponding PUCCH resource of │ ⌐ 513
│  the plurality of PUCCH resources                  │
└─────────────────────────────────────────────────┘

┌─────────────────────────────────────────────────┐
│  receiving, from the UE, a NACK for the plurality of │
│  PDSCHs on a PUCCH resource of the plurality of    │ ⌐ 515
│  PUCCH resources                                   │
└─────────────────────────────────────────────────┘

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LENOVO et al.** Discussion on reliability improvement for RRC-CONNECTED UEs. *R1-2100769, 3GPP TSG RAN WG1 #104-e, E-meeting*, 20210125
- **LG ELECTRONICS**. Mechanisms to improve Reliability of Broadcast/Multicast service. *R1-2008065, 3GPP TSG RAN WG1 Meeting #103-e, Online*, 26 October 2020
- **FUTUREWEI**. Group scheduling for MC/BC services. *R1-2007556, 3GPP TSG RAN WG1 #103-e, e-Meeting*, 26 October 2020
- **VIVO**. Discussion on mechanisms to improve reliability for RRC_CONNECTED UEs. *R1-2100470, 3GPP TSG RAN WG1 #104-e, e-Meeting*, 25 January 2021